Europäisches Patentamt

European Patent Office

Office européen des brevets

(11) Veröffentlichungsnummer: **0 226 717 B1**

(19)

(12) # EUROPÄISCHE PATENTSCHRIFT

(45) Veröffentlichungstag der Patentschrift: **24.06.92**

(21) Anmeldenummer: **86112449.3**

(22) Anmeldetag: **09.09.86**

(51) Int. Cl.⁵: **B60K 28/16**

54 **Anfahr-Regelung bei Kraftfahrzeugen.**

(30) Priorität: **14.12.85 DE 3544294**

(43) Veröffentlichungstag der Anmeldung:
**01.07.87 Patentblatt 87/27**

(45) Bekanntmachung des Hinweises auf die
Patenterteilung:
**24.06.92 Patentblatt 92/26**

(84) Benannte Vertragsstaaten:
**AT DE FR GB IT SE**

(56) Entgegenhaltungen:
**EP-A- 0 245 399**
**DE-A- 3 002 084**
**DE-A- 3 417 089**

(73) Patentinhaber: **WABCO Westinghouse Fahrzeugbremsen GmbH
Am Lindener Hafen 21 Postfach 91 12 80
W-3000 Hannover 91(DE)**

(72) Erfinder: **Lindemann, Klaus
Lindener Weg 40 B
W-3000 Hannover 91(DE)**

(74) Vertreter: **Schrödter, Manfred
WABCO Westinghouse Fahrzeugbremsen
GmbH Am Lindener Hafen 21 Postfach 91 12
80
W-3000 Hannover 91(DE)**

EP 0 226 717 B1

## Beschreibung

Die Erfindung bezieht sich auf eine Anfahr-Regelung bei Kraftfahrzeugen gemäß dem Oberbegriff des Patentanspruchs 1 aus beiden Anspruchsfassungen.

Die ältere, am 19.11.87 veröffentlichte Anmeldung EP-A-0 245 399 genießt die Priorität vom 16.11.85 und gilt daher gemäß Artikel 54(3) und (4) EPÜ als Stand der Technik für die Vertragsstaaten DE, FR, GB und SE. Da die Vertragsstaaten AT und IT in dieser Anmeldung nicht benannt worden sind, enthält die vorliegende Anmeldung einen zweiten Anspruchssatz (Fassung B) für diese Staaten.

Bekannte Anfahr-Regelungen sollen ein unkontrolliertes Durchdrehen der Antriebsräder beim Anfahren eines Fahrzeugs auf glattem Untergrund verhindern (DE-A-18 08 799). Durch ein derartiges Durchdrehen wird die Anfahrzeit des Fahrzeugs unnötig verlängert, seine Zugkraft vermindert, sowie die Seitenführungskraft herabgesetzt.

Das Durchdrehen der Räder wird von am Rad angeordneten Drehzahl-Sensoren erfasst und in einer Elektronik ausgewertet. Rutscht nur ein Rad durch, wird die zugehörige Radbremse z.B. über ein Ventil betätigt (Differentialbremse). Hierdurch wird über das Rad-Differential ein Antriebsmoment auf das andere, stillstehende Rad übertragen.

Drehen jedoch beide Antriebsräder durch, dann wird die Leistung des Antriebsmotors heruntergeregelt. Hierzu muß in das Gasgestänge eingegriffen werden, und der vom Fahrer eingestellte Wert vermindert werden. Dies geschieht z.B. durch einen eingefügten elektrischen Hubmagneten oder einen pneumatischen oder hydraulischen Arbeitszylinder.

Bei der oben genannten bekannten Anordnung wird das Gas der Antriebsmaschine weggenommen, sobald ein Rad der Antriebsachse durchdreht. Dies wird durch das Auftreten eines +b-Regelsignals (Beschleunigungs-Signal eines Rades) erkannt. Sobald daraufhin das +b-Signal wieder abgefallen ist, wird das vom Fahrer eingestellte Gas wieder zugelassen.

Ein derartiges Regelkonzept (Schwarz-Weiß-Regelung) verursacht naturgemäß ein relativ unkomfortables, ruckweises Beschleunigen des Fahrzeugs.

Aus der EP-A-0 245 399 (frühere Anmeldung) ist weiter ein Antriebsschlupfregelsystem bekannt, bei dem ein Motormomentenregler ein Stellglied für das Motormoment so steuert, daß es zuerst mit größerer Steigung und dann mit geringerer Steigerung verstellt wird. Dies gilt sowohl für das Gasgeben als auch für das Gasreduzieren. Der Regler hat hierzu integrale oder PI-Eigenschaften.

Der Erfindung liegt deshalb die Aufgabe zugrunde, den Anfahr-Vorgang komfortabel ablaufen zu lassen. Dabei soll jedoch vorausgesetzt sein, daß wie beim Stand der Technik nur ein Schwarz-Weiß-Signal zur Anzeige für das Durchdrehen der Antriebsräder zur Verfügung steht.

Diese Aufgabe wird für die Länder DE, FR, GB, SE durch die in den Patentansprüchen 1 und 2 (Fassung A) und für die Länder AT und IT durch die in den Patentansprüchen 1, 2 und 3 (Fassung B) angegebene Erfindung gelöst. Die Unteransprüche enthalten zweckmäßige Weiterbildungen der Erfindung.

Zur näheren Erläuterung der Erfindung sind in einer Zeichnung Ausführungsbeispiele dargestellt.

Fig. 1 zeigt schematisch eine bekannte Anordnung zur Anfahr-Regelung mit mechanischem Gas-Gestänge.

Fig. 2 zeigt eine gemäß der Erfindung verbesserte Anordnung.

Fig. 3 zeigt ein Diagramm mit Geschwindigkeits- und Druckverläufen zu Fig. 2.

Fig. 4 zeigt eine Variante der Erfindung mit pneumatischer Gas-Betätigung.

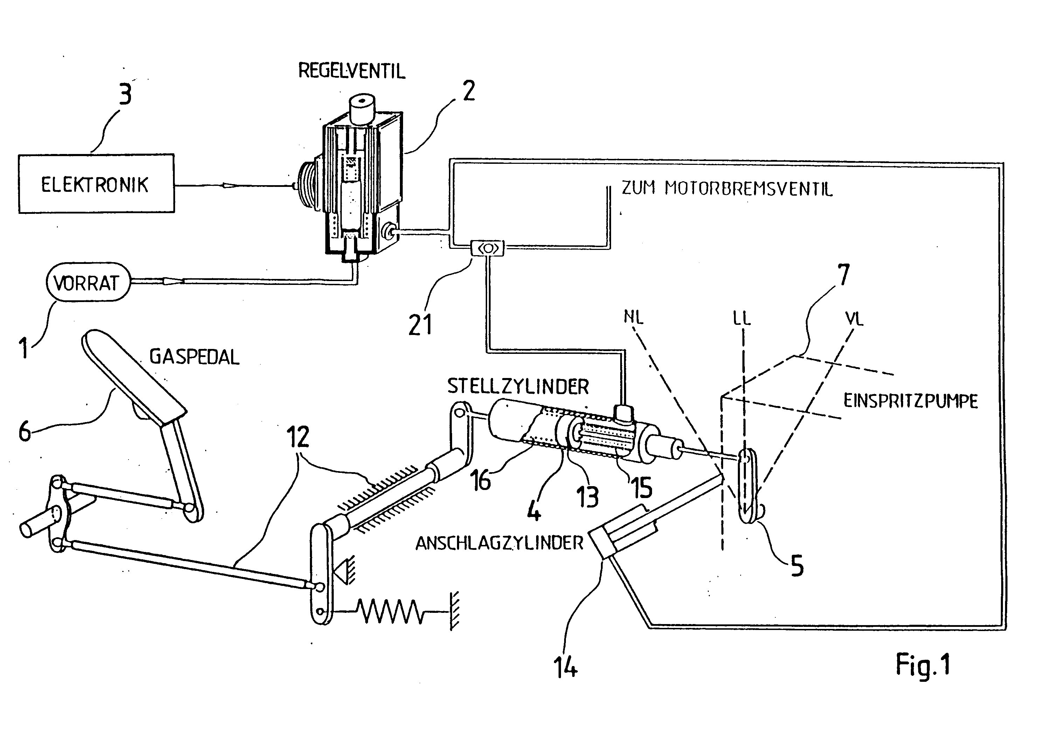

Gemäß Fig. 1 ist ein Gaspedal 6 über ein mechanisches Gestänge 12 sowie über einen Stellzylinder 4 mit einem Hebel 5 einer Einspritzpumpe 7 verbunden. Die Einspritzpumpe 7 regelt die Kraftstoffzufuhr zu einem nicht dargestellten Antriebsmotor. Der Hebel 5 kann in die Stellungen Null-Last (NL), Leerlauf (LL) und Vollast (VL) gebracht werden. Ein Anschlagzylinder 14 dient dazu, den Hebel 5 während der Fahrt nicht unter die Leerlaufstellung (LL) abfallen zu lassen.

Der in das Gasgestänge 12 eingefügte Stellzylinder 4 dient dazu, bei Bedarf, hier im Falle des Durchrutschens der Antriebsräder, das vom Fahrer eingestellte Gas zu vermindern. Der Kolben 13 des Stellzylinders 4 ist durch Federn 15 und 16 im Normalfall in einer Mittelstellung zentriert. Bei Druckbeaufschlagung des Stellzylinders 4 verringert sich seine Länge, wodurch der Hebel 5 der Einspritzpumpe 7 in Richtung auf kleinere Leistungen hin verstellt wird.

Der Stellzylinder 4 wird durch ein Druckmittel aus einem Vorratsbehälter 1 über ein Regelventil 2 versorgt. Das Regelventil 2 wird durch eine Elektronik 3 elektrisch angesteuert. Es ist als 3/2-Wegeventil ausgebildet. Sein Ausgang ist über ein Wechselventil 21 an den Stellzylinder 4 angeschlossen. Außerdem besteht ein Anschluß zum Anschlagzylinder 14. An das Wechselventil 21 ist ferner ein Motorbremsventil angeschlossen.

Die Anordnung nach Fig. 1 funktioniert wie folgt.

Sobald die Antriebsräder des Fahrzeugs durchrutschen, d.h. um einen bestimmten Betrag $\Delta v$ über der Fahrzeuggeschwindigkeit liegen, gibt die Elektronik 3 ein Signal an das Regelventil 2 ab. Dieses schaltet daraufhin auf Durchgang und verbindet so den Vorrat 1 mit dem Stellzylinder 4. Der Stellzylinder 4 verkürzt sich soweit, bis der Hebel 5 der Einspritzpumpe 7 in die Leerlaufstellung LL geschwenkt ist. In dieser Stellung wird der hebel 5 vom Anschlagzylinder 14 gehalten.

Durch die so erfolgte Leistungsverminderung der Antriebsmaschine nähert sich die Drehzahl der Antriebsräder wieder der Fahrzeuggeschwindigkeit. Daraufhin fällt das Durchdrehsignal der Elektronik 3 ab, das Regelventil 2 entlüftet den Stellzylinder 4, und das ursprünglich vom Fahrer eingestellte Gas wird wieder wirksam. Dieses Regelspiel (Schwarz -Weiß-Regelung) wiederholt sich so lange, bis die Antriebsräder endgültig nicht mehr durchdrehen.

Nachteilig an der beschriebenen Schwarz-Weiß-Regelung ist, daß sich für die Radgeschwindigkeiten der Antriebsräder relativ steile Gradienten ergeben, und damit ein Antriebsschlupf, der einerseits relativ groß und andererseits nahezu Null ist. Die sich ergebenden großen Durchdrehamplituden mindern die Fahrstabilität während des Anfahrvorganges. Andererseits führt das zeitweilige Fehlen eines Antriebsschlupfes zu Beschleunigungslöchern des Fahrzeuges. Insgesamt ergibt sich damit ein unkomfortabler Regelungsverlauf.

Um eine bessere Regelfunktion der Anfahr-Regelung zu erreichen, müssen die Durchdrehamplituden möglichst im optimalen Schlupfbereich von etwa 20 % verlaufen, die Radgeschwindigkeiten müssen möglichst flache Gradienten aufweisen, und die Antriebsräder sollten auch in den Regelpausen nicht die Fahrzeuggeschwindigkeit und damit den Schlupf Null erreichen.

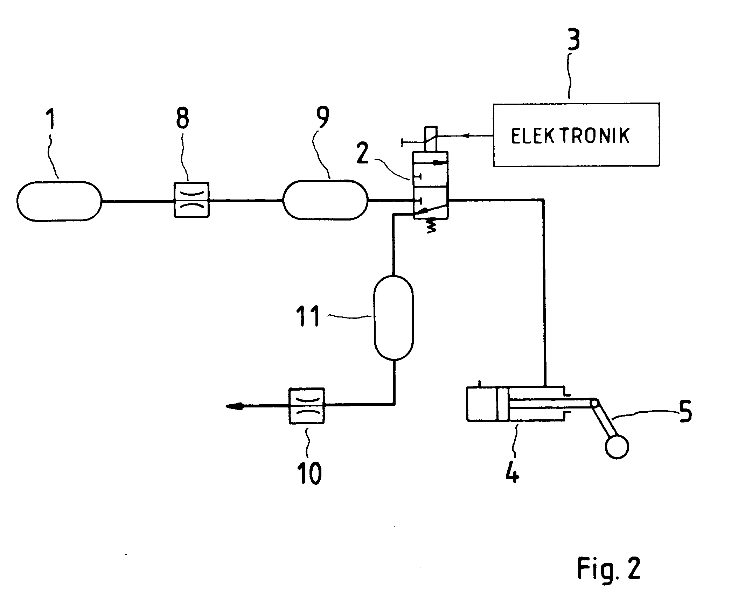

Dies wird gemäß der Erfindung dadurch erreicht, daß der Druck im Stellzylinder 4 in Form einer Knickcharakteristik gesteuert wird. Eine Anordnung, mit der dies erreicht werden kann, ist schematisch in Fig. 2 dargestellt.

Gemäß Fig. 2 ist zwischen dem Vorratsbehälter 1 und dem Regelventil 2 eine erste Blende 8 sowie ein erstes Volumen 9 eingefügt. In die Entlüftungsleitung des Regelventils 3 ist ein zeites Volumen 11 und eine zweite Blende 10 eingefügt. Im übrigen gleicht die Anordnung nach Fig. 2 der nach Fig. 1, wobei nicht direkt zur Erfindung gehörende Bauteile nicht dargestellt sind.

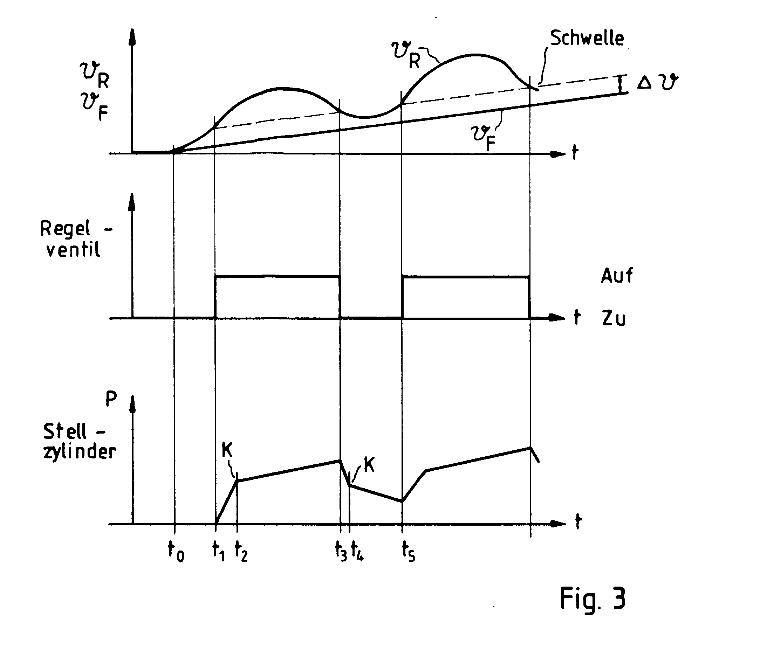

Die Funktion der Anordnung nach Fig. 2 wid im folgenden in Verbindung mit den in der Fig. 3 dargestellten Diagrammen näher erläutert.

Es sei angenommen, daß zum Zeitpunkt $t_0$ das Durchdrehen der Antriebsräder beginnt. Zu diesem Zeitpunkt löst sich also die Radgeschwindigkeit $V_R$ von der Fahrzeuggeschwindigkeit $V_F$. Im Zeitpunkt $t_1$ ist der Unterschied zwischen der Radgeschwindigkeit und der Fahrzeuggeschwindigkeit bereits so groß, daß ein vorgegebener Schwellwert $\Delta v$ erreicht ist. In diesem Zeitpunkt gibt die Elektronik 3 ein Signal auf das Regelventil 2, welches daraufhin in die den Stellzylinder 4 belüftende Stellung umschaltet. Es entleert sich dabei zunächst das erste Volumen 9, was zu einem schnellen Druckanstieg des Druckes p im Stellzylinder 4 führt. Im Zeitpunkt $t_2$ (Knickpunkt K) hat sich das erste Volumen 9 entleert bzw. zu einem Druckausgleich mit dem Stellzylinder 4 geführt. Im Anschlüß an diesen ersten steilen Druckanstieg kommt es durch die Wirkung der ersten Blende 8 zu einem weiteren flachen Druckanstieg.

Im Zeitpunkt $t_3$ erkennt die Elektronik 3, daß die Differenz zwischen der Radgeschwindigkeit und der Fahrzeuggeschwindigkeit den Schwellwert $\Delta v$ wieder unterschritten hat, und schaltet das Regelventil 2 wieder in die (gezeichnete) Ausgangslage zurück. In dieser Stellung wird der Stellzylinder 4 entlüftet. Die Entlüftung erfolgt wiederum zunächst schnell in das zweite Volumen 11. Nach Erreichen des Knickpunktes K (Volumenausgleich) wird wiederum über die zweite Blende 11 mit geringerer Steigung weiter entlüftet.

Der beschriebene Regelungsablauf wiederholt sich im Zeitpunkt $t_5$.

Der zunächst steile Druckgradient im Stellzylinder 4 soll in erster Linie dazu dienen, die Hysterese des gesamten Betätigungsmechanismusses zu überwinden und die Antriebsräder möglichst schnell abzubremsen bzw. zu beschleunigen. Der folgende flache Verlauf soll dann bewirken, daß der Motor und damit die Antriebsräder nicht zu unkontrolliert reagieren und der Abregelpunkt relativ genau ohne wesentliches Über- oder Untersteuern erreicht wird. Die sich dabei ergebende Regelfrequenz beträgt etwa 2 bis 3 Hz.

Die durch die Erfindung erreichte Knick-Charakteristik des Druckes im Stellzylinder 4 kann auch auf andere Weise erreicht werden. So ist z.B. denkbar, anstelle des 3/2-Wege-Regelventils 2 ein Proportionalventil zu verwenden. Dieses wäre dann durch die Elektronik 3 derart anzusteuern, daß zunächst ein großer Öffnungsquerschnitt eingestellt wird, und nach Ablauf einer vorbestimmten Zeit der Durchflußquerschnitt auf einen kleineren Wert verringert wird. Dies gilt sowohl für die Be- als auch für die Entlüftung des Stellzylinders 4.

Eine weitere Möglichkeit wäre, anstelle des Stellzylinders 4 einen elektrisch betätigbaren Hubmagneten einzusetzen, und diesen durch die Elektronik 3 mit einem entsprechend gestuften Strom zu beaufschlagen.

Anstatt wie gezeichnet, diskret ausgebildete Volumen und Blenden vorzusehen, ist es auch möglich, diese Bauteile durch eine entsprechende Ausbildung der Länge und des Durchmessers der Anschlußleitungen des Regelventils 2 zu ersetzen.

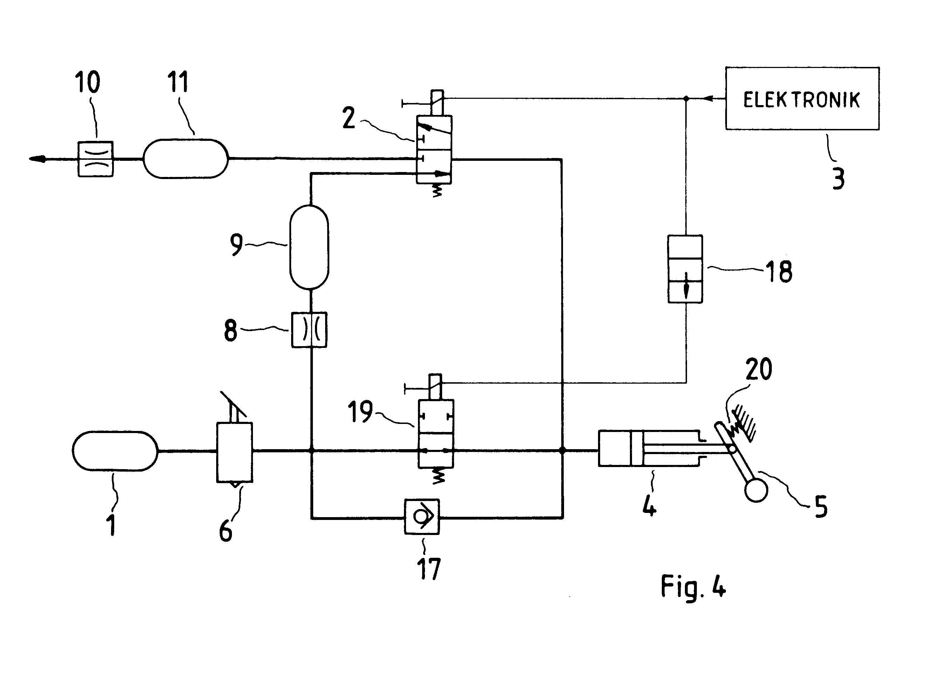

In der Fig. 4 ist eine weitere Anordnung zur Anfahr-Regelung dargestellt, wobei hier der Hebel 5 der Einspritzpumpe nicht über ein mechanisches Gestänge, sondern pneumatisch betätigt wird. Bei normaler Fahrt betätigt der Fahrer das Gaspedal 6, welches hier als Tittplattenventil ausgebildet ist und einen abgestuften Steuerdruck aus dem Vorratsbehälter 1 über ein normalerweise offenes 2/2-Wegeventil 19 an einen Stellzylinder 4 abgibt. Der Kolben des Stellzylinders 4 ist mit dem Einstellhebel 5 der Einspritzpumpe verbunden. Beim Ausfahren des Kolbens des Stellzylinders 4 wird der Einstellhebel 5 gegen die Kraft einer Feder 20 nach rechts bewegt, wobei die Leistung des Motors erhöht wird.

Falls nun beim Anfahren die Antriebsräder des Fahrzeugs durchdrehen, wird dies von der Elektronik 3 erkannt. Die Elektronik 3 gibt daraufhin ein Signal an das 2/2-Wegeventil 19 sowie an das Regelventil 2 ab. In die elektrische Ansteuerleitung zum Wegeventil 19 ist ein Zeitglied 18 mit Abfallverzögerung eingebaut.

In die Entlüftungsleitung des Regelventils 2 ist wiederum ein zweites Volumen 11 und eine zweite Blende 10 eingebaut. Die Eingangsleitung des Regelventils 2 ist mit dem Ausgang des Trittplattenventils 6 über ein erstes Volumen 9 und eine erste Blende 8 verbunden. Schließlich ist das Wegeventil 19 noch durch ein Rückschlagventil 17 überbrückt.

Die in Fig. 4 dargestellte Anordnung funktioniert wie folgt.

Gezeichnet ist der Normalbetrieb, in dem der Fahrer durch das geöffnete Wegeventil 19 ungehindert Gas geben kann.

Sobald jedoch von der Elektronik 3 ein Durchdrehen der Antriebsräder erkannt wird, werden beide Ventile 2 und 19 umgeschaltet. Damit schließt das Wegeventil 19,und die direkte Beeinflussung der Antriebsmaschine durch den Fahrer ist unterbunden. Das Regelventil 2 ist auf Entlüftung geschaltet. Der Stellzylinder 4 entlüftet sich hierdurch über das zweite Volumen 11 und die zweite Blende 10 zunächst schnell und dann langsam, wodurch die oben beschriebene Knick-Charakteristik erzielt wird.

Sobald die Elektronik 3 erkennt, daß das Durchdrehen der Antriebsräder beendet ist, wird das Regelventil 2 wieder in die gezeichnete Stellung zurückgeschaltet. Das Wegeventil 19 bleibt infolge der Abfallverzögerung des Zeitgliedes 18 jedoch in der gesperrten Stellung stehen. Die erneute Belüftung des Stellzylinders 4 erfolgt nun zunächst durch den Inhalt des ersten Volumens 9 und anschließend durch den Vorratsbehälter 1 über die erste Blende 8. Auch hier wird wieder zunächst schnell und dann langsam belüftet.

Das Rückschlagventil 17 dient dazu, daß der Fahrer auch bei gesperrtem Wegeventil 19 bei Bedarf jederzeit das Gas zurücknehmen kann. In diesem Fall entlüftet sich der Stellzylinder 4 über das Rückschlagventil 17 und das Trittplattenventil 6.

**Patentansprüche**
**Patentansprüche für folgende Vertragsstaaten : DE, FR, GB, SE**

1. Anordnung zur Anfahr-Regelung bei Kraftfahrzeugen, wobei ein Durchdrehen der Antriebsräder mittels Radsensoren und einer Elektronik (3) mit einem Schaltausgang erkannt wird und bei Vorliegen eines Durchdreh-Signals die Leistung der Antriebsmaschine von der Elektronik (3) mittels eines Stellgliedes (4) herabgeregelt wird, und wobei die Kraft oder der Weg des Stellgliedes (4) zu Beginn und am Ende des Durchdrehens derart geregelt wird, daß zunächst ein steiler und danach ein flacher Anstieg bzw. Abfall erfolgt, und das Stellglied (4) als pneumatischer oder hydraulischer Stellzylinder (4) ausgebildet und in ein mechanisches Gestänge zwischen einem Gaspedal (6) und dem Hebel (5) einer Einspritzpumpe (7) eingefügt ist, und aus einem Vorratsbehälter (1) über ein mit der Elektronik (3) verbundenes 3/2-Wege-Regelventil (2) mit Druckmittel beaufschlagbar oder entlastbar ist, gekennzeichnet durch folgende Merkmale:
   a) in die Verbindungsleitung zwischen Vorratsbehälter (1) und Regelventil (2) ist eine erste Blende (8) sowie ein erstes Volumen (9) eingefügt;
   b) in die Entlüftungsleitung des Regelventils (2) ist ein zweites Volumen (11) und eine zweite Blende (10) eingefügt (Fig. 2).

2. Anordnung zur Anfahr-Regelung bei Kraftfahrzeugen, wobei ein Druchdrehen der Antriebsräder mittels Radsensoren und einer Elektronik (3) mit einem Schaltausgang erkannt wird und bei Vorliegen eines Durchdreh-Signals die Leistung der Antriebsmaschine von der Elektronik (3) mittels eines Stellgliedes (4) herabgeregelt wird, und wobei die Kraft oder der Weg des Stellgliedes (4) zu Beginn und am Ende des Durchdrehens derart geregelt wird, daß zunächst ein steiler und danach ein flacher Anstieg bzw. Abfall erfolgt, und wobei das Stellglied (4) als pneumatischer Stellzylinder (4) ausgebildet ist, der durch ein als Trittplattenventil (6) ausgebildetes Gaspedal (6) steuerbar ist, und aus einem Vorratsbehälter (1) über ein mit der Elektronik (3) verbundenes 3/2-Wege-Regelventil (2) mit Druckmittel beaufschlagbar oder entlastbar ist, gekennzeichnet durch folgende Merkmale:
   a) In die Verbindungsleitung zwischen dem Trittplattenventil (6) und dem Stellzylinder (4) ist ein 2/2-Wegeventil (19) eingefügt;

b) das Wegeventil (19) ist durch eine Reihenschaltung einer ersten Blende (8), eines ersten Volumens (9) und eines 3/2-Wege-Regelventils (2) überbrückt;

c) in die Entlüftungsleitung des Regelventils (2) ist ein zweites Volumen (11) und eine zweite Blende (10) eingefügt;

d) das Regelventil (2) und das Wegeventil (19) sind von einer Elektronik (3) ansteuerbar (Fig. 4).

**3.** Anordnung nach Anspruch 2, dadurch gekennzeichnet, daß in die elektrische Ansteuerleitung zwischen der Elektronik (3) und dem Wegeventil (19) ein Zeitglied (18) mit Abfallverzögerung eingebaut ist.

**4.** Anordnung nach Anspruch 2, dadurch gekennzeichnet, daß das Wegeventil (19) durch ein Rückschlagventil (17) überbrückt ist.

**5.** Anordnung nach Anspruch 1 bis 4, dadurch gekennzeichnet, daß die Volumen (9, 11) als Rohrleitungen bestimmter Länge und Querschnitts ausgebildet sind.

**6.** Anordnung nach Anspruch 1 bis 5, dadurch gekennzeichnet, daß die Blenden (8, 10) als Rohrleitungen bestimmten Querschnitts ausgebildet sind.

**Patentansprüche für folgende Vertragsstaaten : AT, IT**

**1.** Verfahren zur Anfahr-Regelung bei Kraftfahrzeugen, wobei ein Durchdrehen der Antriebsräder mittels Radsensoren und einer Elektronik mit einem Schaltausgang erkannt wird und bei Vorliegen eines Durchdreh-Signals die Leistung der Antriebsmaschine von der Elektronik mittels eines Stellgliedes herabgeregelt wird, dadurch gekennzeichnet, daß die Kraft oder der Weg des Stellgliedes (4) zu Beginn und am Ende des Durchdrehens derart geregelt wird, daß zunächst ein steiler und danach ein flacher Anstieg erfolgt (Fig. 3).

**2.** Anordnung zur Durchführung des Verfahrens nach Anspruch 1, wobei

a) das Stellglied (4) als pneumatischer oder hydraulischer Stellzylinder (4) ausgebildet und in ein mechanisches Gestänge zwischen einem Gaspedal (6) und dem Hebel (5) einer Einspritzpumpe (7) eingefügt ist,

b) der Stellzylinder (4) aus einem Vorratsbehälter (1) über ein mit der Elektronik (3) verbundenes 3/2-Wege-Regelventil (2) mit Druckmittel beaufschlagbar oder entlastbar ist,

gekennzeichnet durch folgende Merkmale:

c) In die Verbindungsleitung zwischen Vorratsbehälter (1) und Regelventil (2) ist eine erste Blende (8) sowie ein erstes Volumen (9) eingefügt;

d) in die Entlüftungsleitung des Regelventils (2) ist ein zweites Volumen (11) und eine zweite Blende (10) eingefügt (Fig. 2).

**3.** Anordnung zur Durchführung des Verfahrens nach Anspruch 1, wobei das Stellglied (4) als pneumatischer Stellzylinder (4) ausgebildet ist, der durch ein als Trittplattenventil (6) ausgebildetes Gaspedal (6) steuerbar ist, gekennzeichnet durch folgende Merkmale:

a) In die Verbindungsleitung zwischen dem Trittplattenventil (6) und dem Stellzylinder (4) ist ein 2/2-Wegeventil (19) eingefügt;

b) das Wegeventil (19) ist durch eine Reihenschaltung einer ersten Blende (8), eines ersten Volumens (9) und eines 3/2-Wege-Regelventils (2) überbrückt;

c) in die Entlüftungsleitung des Regelventils (2) ist ein zweites Volumen (11) und eine zweite Blende (10) eingefügt;

d) das Regelventil (2) und das Wegeventil (19) sind von einer Elektronik (3) ansteuerbar (Fig. 4).

**4.** Anordnung nach Anspruch 3, dadurch gekennzeichnet, daß in die elektrische Ansteuerleitung zwischen der Elektronik (3) und dem Wegeventil (19) ein Zeitglied (18) mit Abfallverzögerung eingebaut ist.

**5.** Anordnung nach Anspruch 3, dadurch gekennzeichnet, daß das Wegeventil (19) durch ein Rückschlagventil (17) überbrückt ist.

**6.** Anordnung nach Anspruch 2 bis 5, dadurch gekennzeichnet, daß die Volumen (9, 11) als Rohrleitungen bestimmter Länge und Querschnitts ausgebildet sind.

**7.** Anordnung nach Anspruch 2 bis 6, dadurch gekennzeichnet, daß die Blenden (8, 10) als Rohrleitungen bestimmten Querschnitts ausgebildet sind.

**Claims**
**Claims for the following Contracting States : DE, FR, GB, SE**

**1.** An arrangement for controlling start-up in motor vehicles, in which spinning of the driven wheels is detected by means of wheel sensors and an electronics assembly (3) with a switched output, and in the presence of a spinning signal the output of the drive motor is reduced by the electronics assembly (3) by means of a control member (4), and wherein the force or the displacement of the control member (4) at the start and at the end of the spinning is controlled in such a manner that first of all there is a steep rise or fall and thereafter a gradual rise or fall, and the control member (4) is in the form of a pneumatic or hydraulic control cylinder (4) and is inserted in a mechanical linkage between an accelerator pedal (6) and the lever (5) of an injection pump (7), and can have pressure medium admitted to it from a reservoir (1) or evacuated from it by way of a 3/2-way control valve (2) connected to the electronics assembly (3), characterized by the following features:

    a) a first throttle (8) and a first volume (9) are inserted in the connecting line between the reservoir (1) and the control valve (2);

    b) a second volume (11) and a second throttle (10) are inserted in the vent line of the control valve (2) (Fig. 2).

2.   An arrangement for controlling start-up in motor vehicles, in which spinning of the driven wheels is detected by means of wheel sensors and an electronics assembly (3) with a switched output, and in the presence of a spinning signal the output of the drive motor is reduced by the electronics assembly (3) by means of a control member (4), and wherein the force or the displacement of the control member (4) at the start and at the end of the spinning is controlled in such a manner that first of all there is a steep rise or fall and thereafter a gradual rise or fall, and the control member (4) is in the form of a pneumatic control cylinder (4) which is controllable by an accelerator pedal (6) in the form of a pedal-operated valve (6), and can have pressure medium admitted to it from a reservoir (1) or evacuated from it by way of a 3/2-way control valve (2) connected to the electronics assembly (3), characterized by the following features:

    a) a 2/2-way valve (19) is inserted in the connecting line between the pedal-operated valve (6) and the control cylinder (4);

    b) the control valve (19) is by-passed by a series connection of a first throttle (8), a first volume (9) and a 3/2-way control valve (2);

    c) a second volume (11) and a second throttle (10) are inserted in the vent line of the control valve (2);

    d) the control valve (2) and the control valve (19) are controllable by the electronics assembly (3) (Fig. 4).

3.   An arrangement according to claim 2, characterized in that a timing element (18) with trailing edge delay is inserted in the electrical control line between the electronics assembly (3) and the control valve (19).

4.   An arrangement according to claim 2, characterized in that the control valve (19) is by-passed by a non-return valve (17).

5.   An arrangement according to claims 1 to 4, characterized in that the volumes (9, 11) are in the form of pipelines of specific length and cross-section.

6.   An arrangement according to claims 1 to 5, characterized in that the throttles (8, 10) are in the form of pipelines of specific cross-section.

**Claims for the following Contracting States : AT, IT**

1.   A process for controlling start-up in motor vehicles, in which spinning of the driven wheels is detected by means of wheel sensors and an electronics assembly with a switched output, and on the presence of a spinning signal the output of the drive motor is reduced by the electronics assembly by means of a control member, characterized in that the force or the displacement of the control member (4) at the start and at the end of the spinning is controlled in such a manner that first of all there is a steep rise and thereafter a gradual rise (Fig. 3).

2.   An arrangement for implementing the process according to claim 1, in which

    a) the control member (4) is in the form of a pneumatic or hydraulic control cylinder (4) and it is inserted in a mechanical linkage between an accelerator pedal (6) and the lever (5) of an injection pump (7),

    b) the control cylinder (4) can have pressure medium admitted to it from a reservoir (1) or evacuated from it by way of a 3/2-way control valve (2) connected to the electronics assembly (3), characterized by the following features:

    c) a first throttle (8) and a first volume (9) are inserted in the connecting line between the reservoir (1) and the control valve (2);

    d) a second volume (11) and a second throttle (10) are inserted in the vent line of the control valve (2) (Fig. 2).

3. An arrangement for implementing the process according to claim 1, in which the control element (4) is in the form of a pneumatic control cylinder (4) which is controllable by an accelerator pedal (6) in the form of a pedal-operated valve (6), characterized by the following features:

   a) a 2/2-way valve (19) is inserted in the connecting line between the pedal-operated valve (6) and the control cylinder (4);

   b) the control valve (19) is by-passed by a series connection of a first throttle (8), a first volume (9) and a 3/2-way control valve (2);

   c) a second volume (11) and a second throttle (10) are inserted in the vent line of the control valve (2);

   d) the control valve (2) and the control valve (19) are controllable by an electronics assembly (3) (Fig. 4).

4. An arrangement according to claim 3, characterized in that a timing element (18) with trailing edge delay is inserted in the electrical control line between the electronics assembly (3) and the control valve (19).

5. An arrangement according to claim 3, characterized in that the control valve (19) is by-passed by a non-return valve (17).

6. An arrangement according to claims 2 to 5, characterized in that the volumes (9, 11) are in the form of pipelines of specific length and cross-section.

7. An arrangement according to claims 2 to 6, characterized in that the throttles (8, 10) are in the form of pipelines of specific cross-section.

**Revendications**
**Revendications pour les Etats contractants suivants : DE, FR, GB, SE**

1. Agencement de régulation au démarrage de véhicules automobiles, avec lequel un emballement des roues motrices est décelé au moyen de capteurs de roue et d'une électronique (3) dotée d'une sortie de commande et, lors de l'occurrence d'un signal d'emballement, l'électronique (3) diminue la puissance de la machine motrice au moyen d'un organe de réglage (4), et la force ou la course de l'organe de réglage (4) est réglée au début et à la fin de l'emballement de manière telle qu'il y ait d'abord une variation, croissance ou décroissance selon le cas, à pente raide puis à pente plate, l'organe de réglage (4) étant réalisé en tant que vérin de réglage pneumatique ou hydraulique (4) et étant inséré dans une tringlerie mécanique entre une pédale d'accélérateur (6) et le levier (5) d'une pompe à injection (7) et pouvant être déchargé ou chargé par du fluide de pression provenant d'un réservoir (1) via une vanne de réglage (2) du type 3/2 reliée à l'électronique (3),
caractérisé par les caractéristiques suivantes :

   a) un premier organe restricteur (8) et un premier volume (9) sont insérés dans la conduite assurant la liaison entre réservoir (1) et vanne de réglage (2);

   b) dans la conduite de mise à l'évent de la vanne de réglage (2) sont insérés un deuxième volume (11) et un deuxième organe restricteur (10) (figure 2).

2. Agencement de régulation au démarrage de véhicules automobiles, avec lequel un emballement des roues motrices est décelé au moyen de capteurs de roue et d'une électronique (3) dotée d'une sortie de commande et, lors de l'occurrence d'un signal d'emballement, l'électronique (3) diminue la puissance de la machine motrice au moyen d'un organe de réglage (4), et la force ou la course de l'organe de réglage (4) est réglée au début et à la fin de l'emballement de manière telle qu'il y ait d'abord une variation, croissance ou décroissance selon le cas, à pente raide puis à pente plate, l'organe de réglage (4) étant réalisé en tant que vérin pneumatique (4) qui peut être commandé par une pédale d'accélérateur (6) réalisée en tant que vanne à commande par pédale (6), ledit vérin de réglage pouvant être déchargé ou mis en charge à partir d'un réservoir (1) via une vanne de réglage (2) du type 3/2 reliée à l'électronique (3),
caractérisé par les caractéristiques suivantes :

   a) une vanne du type 2/2 (19) est insérée dans la conduite assurant la liaison entre la vanne à pédale de commande (6) et le vérin de réglage (4);

   b) cette vanne (19) est pontée par un groupement série d'un premier organe restricteur (8), d'un premier volume (9) et d'une vanne de réglage (2) du type 3/2;

   c) un deuxième volume (11) et un deuxième organe restricteur (10) sont insérés dans la conduite de mise à l'évent de la vanne de réglage (2);

   d) la vanne de réglage (2) et la vanne (19) peuvent être commandées par une électronique (3) (figure 4).

3. Agencement selon revendication 2, caractérisé par le fait qu'un organe temporisateur (18) avec retardement de décroissance est inséré dans la conduite de commande électrique entre l'électronique (3) et la vanne (19).

4. Agencement selon revendication 2, caractérisé par le fait que la vanne (19) est pontée par une soupape antiretour (17).

5. Agencement selon revendications 1 à 4, caractérisé par le fait que les volumes (9, 11) sont réalisés en tant que conduites tubulaires de longueur et de section droite déterminées.

6. Agencement selon les revendications 1 à 5, caractérisé par le fait que les organes restricteurs (8, 10) sont réalisés en tant que conduites tubulaires de section droite déterminée.

**Revendications pour les Etats contractants suivants : AT, IT**

1. Procédé de régulation au démarrage de véhicules automobiles, avec lequel un emballement des roues motrices est décelé au moyen de capteurs de roue et d'une électronique dotée d'une sortie de commande et, lors de l'occurrence d'un signal d'emballement, l'électronique diminue la puissance de la machine motrice au moyen d'un organe de réglage, caractérisé par le fait que la force ou la course de l'organe de réglage (4) est réglée au début et à la fin de l'emballement de manière telle qu'il y ait d'abord une croissance à pente raide puis à pente plate (figure 3).

2. Agencement de mise en oeuvre du procédé selon revendication 1, dans lequel
a) l'organe de réglage (4) est réalisé en tant que vérin de réglage pneumatique ou hydraulique (4) et est inséré dans une tringlerie mécanique entre une pédale d'accélérateur (6) et le levier (5) d'une pompe à injecton (7),
b) le vérin de réglage (4) peut être déchargé ou chargé par du fluide de pression provenant d'un réservoir (1) via une vanne de réglage (2) du type 3/2 reliée à l'électronique (3),
caractérisé par les caractéristiques suivantes :
a) un premier organe restricteur (8) et un premier volume (9) sont insérés dans la conduite assurant la liaison entre réservoir (1) et vanne de réglage (2);
b) dans la conduite de mise à l'évent de la vanne de réglage (2) sont insérés un deuxième volume (11) et un deuxième organe restricteur (10) (figure 2).

3. Agencement de mise en oeuvre du procédé selon revendication 1, dans lequel l'organe de réglage (4) est réalisé en tant que vérin pneumatique (4) qui peut être commandé par une pédale d'accélérateur (6) réalisée en tant que vanne à commande par pédale (6),
caractérisé par les caractéristiques suivantes :
a) une vanne du type 2/2 (19) est insérée dans la conduite assurant la liaison entre la vanne à pédale de commande (6) et le vérin de réglage (4);
b) cette vanne (19) est pontée par un groupement série d'un premier organe restricteur (8), d'un premier volume (9) et d'une vanne de réglage (2) du type 3/2;
c) un deuxième volume (11) et un deuxième organe restricteur (10) sont insérés dans la conduite de mise à l'évent de la vanne de réglage (2);
d) la vanne de réglage (2) et la vanne (19) peuvent être commandées par une électronique (3) (figure 4).

4. Agencement selon revendication 3, caractérisé par le fait qu'un organe temporisateur (18) avec retardement de décroissance est inséré dans la conduite de commande électrique entre l'électronique (3) et la vanne (19).

5. Agencement selon revendication 3, caractérisé par le fait que la vanne (19) est pontée par une soupape antiretour (17).

6. Agencement selon revendications 2 à 5, caractérisé par le fait que les volumes (9, 11) sont réalisés en tant que conduites tubulaires de longueur et de section droite déterminées.

7. Agencement selon revendications 2 à 6, caractérisé par le fait que les organes restricteurs (8, 10) sont réalisés en tant que conduites tubulaires de section droite déterminée.

Fig.1

EINSPRITZPUMPE

ZUM MOTORBREMSVENTIL

REGELVENTIL

ELEKTRONIK

VORRAT

GASPEDAL

STELLZYLINDER

ANSCHLAGZYLINDER

Fig. 2

Fig. 3

ELEKTRONIK

Fig. 4

EP 0 226 717 B1

12